# EUROPÄISCHE PATENTSCHRIFT

(11) **EP 1 732 428 B1**
(45) Veröffentlichungstag und Bekanntmachung des Hinweises auf die Patenterteilung: **30.09.2015**
(21) Anmeldenummer: 05737867.1
(22) Anmeldetag: 31.03.2005
(51) Int. Cl.: A47J 43/07, A47J 19/02

(54) **HAUSHALTSGERÄT MIT EINER SICHERHEITSEINRICHTUNG**
DOMESTIC APPLIANCE COMPRISING A SAFETY DEVICE
APPAREIL ELECTROMENAGER COMPRENANT UN DISPOSITIF DE SECURITE

(30) Priorität: 31.03.2004 DE 102004015885
(43) Veröffentlichungstag der Anmeldung: 20.12.2006
(73) Patentinhaber: BSH Hausgeräte GmbH, 81739 München (DE)
(72) Erfinder: MAZEJ, Stanislav, 3303 Gomilsko (SI); OGRIZEK, Darko, 3320 Velenje (SI); SEDOVSEK, Aleksander, 3330 Mozirje (SI); SEMEJA, Uros, 3327 Smartno ob Paki (SI); ZIBRET, Igor, 3327 Smartno ob Paki (SI)
(86) Internationale Anmeldenummer: PCT/EP2005/051455
(87) Internationale Veröffentlichungsnummer: WO 2005/094650

(56) Entgegenhaltungen:
- EP-A- 0 346 598
- EP-A- 1 435 634
- DE-A1- 4 309 033
- US-A- 4 297 038
- US-A- 5 392 699

## Beschreibung

Die Erfindung betrifft ein elektromotorisches Haushaltsgerät, insbesondere Entsafter oder Saftzentrifuge mit einem durch eine Sicherheitseinrichtung gegen Einschalten blockierbaren Betätigungselement für einen Schalter zum Steuern eines Antriebsmotors, der zum Antrieb eines Arbeitswerkzeugs vorgesehen ist, dem ein Sammelgefäß für abgetrennte Nahrungsmittelbestandteile zugeordnet ist, durch das in seiner betriebsgemäß eingesetzten Position die Sicherheitseinrichtung in eine das Betätigungselement freigebende Stellung eingesetzt ist.

Aus EP 346 598 A1 ist eine Saftzentrifuge bekannt, die ein das Gehäuseunterteil durchdringendes Sperrelement aufweist, das von einem vom Deckel betätigbaren Bauteil in Verschieberichtung entgegen der Kraft eines Federelements verschiebbar gelagert ist. Das Sperrelement dient dazu ein Einschalten zu verhindern, wenn der Deckel nicht betriebsgemäß aufgesetzt ist. Nachteilig ist dabei jedoch, dass ein Betrieb der Saftzentrifuge dann ermöglicht ist, wenn zwar der Deckel aufgesetzt und der Siebkorb eingesetzt, aber das Sammelgefäß für den Siebkorb vergessen wurde. Aus dem US-Patent US 5,392,699 ist ein Gemüse- und Fruchtsaftgerät bekannt, auf das ein Mixbecher oder ein Deckel aufsetzbar ist, und das einen Tastschaltersatz mit einem Tastschalter zur Stromzufuhr aufweist, der durch eine Rückhalteplatte, die zu diesem Zweck mit einer Feder vorgespannt ist, in eine eingeschaltete Raststellung gebracht werden kann, in der der Motor des Küchengeräts zum Antrieb mit Strom versorgt wird. Außerdem ist ein Sicherheitsmechanismus vorgesehen, der beim Entfernen des Mixbechers oder des Deckels die Rückhalteplatte gegen die Federspannung betätigt, sodass der Tatschalter nicht mehr in die eingeschaltete Raststellung gebracht werden kann beziehungsweise, soweit der Aufsatz während des Betriebs entfernt wird, aus der eingeschalteten Raststellung in eine ausgeschaltete Stellung zurückgeleitet. Die deutsche Offenlegungsschrift DE 4309033 A1 offenbart einen Handrührer, der an der Griffoberseite mit einem Schaltknopf versehen ist und zusätzlich auf der Griffunterseite mit einem Entriegelungsknopf. Eine Sicherheitsschaltvorrichtung verriegelt den Schaltknopf zur Sicherheit, wenn der Entriegelungsknopf nicht betätigt ist.

Aufgabe der Erfindung ist es, eine Vorrichtung zu schaffen, bei der ein Betrieb des Haushaltsgerätes verhindert ist, wenn ein Sammelgefäß fehlt oder unsachgemäß eingesetzt ist.

Erfindungsgemäß wird diese Aufgabe dadurch gelöst, dass die Sicherheitseinrichtung durch das Sammelgefäß in seiner betriebsmäßig eingesetzten Position in eine das Betätigungselement freigebende Stellung gesetzt ist und die Sicherheitsrichtung ein in eine Kulisse eines mit dem Betätigungselement verbundenen Kulissenträgers eingreifendes, zum Blockieren des Schalters an einem Anschlag der Kulisse anliegendes Sperrmittel aufweist. Dadurch wird ein sicherer Betrieb des Haushaltsgeräts ermöglicht.

Vorzugsweise ist die Sicherheitseinrichtung vertikal verstellbar. Das Sperrmittel greift dabei in einer im wesentlichen horizontalen Richtung in die Kulisse des Kulissenträgers ein. So wird eine sehr kompakte Bauweise für die Sicherheitseinrichtung und das Sperrmittel geschaffen.

In einer bevorzugten konstruktiven Ausgestaltung ist das Sperrmittel unterhalb einer Bodenplatte der Sicherheitseinrichtung angeordnet und erstreckt sich radial nach außen vorstehend in die Kulisse des Kulissenträgers.

Das Sperrmittel kann in einfacher Weise als Zapfen ausgebildet sein, der vorzugsweise über einen Verbindungssteg mit der Bodenplatte verbunden ist. Wird die Bodenplatte aus Kunststoff hergestellt, so kann der Verbindungssteg und der Zapfen einstückig an der Bodenplatte im Kunststoff-Spritzgußverfahren angeformt sein.

Vorzugsweise ist die Bodenplatte als eine den Motor koaxial umgebende Kreisringscheibe ausgebildet. Dabei weist die Bodenplatte eine zentrale Öffnung auf, durch die eine Antriebsachse des Motors hindurchragt, um an ein Kupplungselement des Arbeitswerkzeugs angeschlossen zu werden.

Die Sicherheitseinrichtung kann in der das Betätigungselement blockierenden oberen Stellung mittels mindestens eines sich einerseits an einem Gehäuseteil und andererseits an der Sicherheitseinrichtung abstützendes, vorzugsweise als Federwendel ausgebildetes Spannelement vorgespannt am Haushaltsgerät gelagert sein. So ist sichergestellt, dass bei fehlendem Sammelgefäß der Zapfen des Sperrelements an dem Anschlag in der Kulisse des Kulissenträgers blockierend eingreift.

Die Sicherheitseinrichtung kann beispielsweise drei über einen Umfang verteilte, vertikal ausgerichtete Tragstifte für das Sammelgefäß aufweisen, so dass sich das Sammelgefäß zuverlässig auf der Sicherheitseinrichtung abstützt.

Die Sicherheitseinrichtung kann über mindestens einen Schnapprastmechanismus in ihrer vorgespannten Lage an dem Gehäuseteil gehalten sein. Dabei weist der Schnapprastmechanismus mindestens einen am Gehäuseteil vorgesehenen Rasthaken auf, der in einen zugeordneten Rastsitz an der Sicherheitseinrichtung angreift.

Der mindestens eine Rastsitz kann vorzugsweise als Rücksprung an der Bodenplatte der Sicherheitseinrichtung ausgebildet sein, so dass der Rasthaken bzw. die Rastnase nicht über die obere Fläche der Bodenplatte das Sammelgefäß störend vorsteht Der Rücksprung kann also zur verborgenen Aufnahme einer Rastnase des Rasthakens ausgebildet sein.

Die Sicherheitseinrichtung kann auch einen Fühler zur Erkennung des Tresterbehälters in einer am Haushaltsgerät eingesetzten Position aufweisen, durch welchen Fühler bei Vorhandensein des Tresterbehälters die Sicherheitseinrichtung in eine das Betätigungselement freigebende Stellung gesetzt ist.

In einer bevorzugten Ausgestaltung der Erfindung weist die Sicherheitseinrichtung einen den Fühler tragenden Schieber auf, der ein das Betätigungselement blockierbares Sperrelement aufweist. Bei betriebsgemäß eingesetztem Tresterbehälter drückt ein seitlicher Wandabschnitt des Tresterbehälters gegen den Fühler und durch einsetzen des Tresterbehälters in die Betriebsposition wird der Schieber in eine das Betätigungselement freigebende Stellung gesetzt. So wird eine mechanischer Sperrriegel für das Betätigungselement bereitgestellt, der unabhängig einer elektrischen Versorgung des Haushaltsgerätes betriebsbereit ist. Insbesondere stellt der mechanische Sperrriegel eine kostengünstige Lösung für Erkennung des Tresterbehälters durch die Sicherheitseinrichtung dar.

Das Sperrelement kann als Zapfen ausgebildet sein, der in eine mit dem Betätigungselement verbundene Kulisse eines Kulissenträgers eingreift. Dabei kann die Kulisse zum Blockieren des Betätigungselements einen an dem Zapfen des Sperrelements anliegenden Vorsprung aufweisen. Der Kulissenträge kann insbesondere mehrere Kulissen aufweisen, die jeweils geeignet geformt für eine Sicherheitseinrichtung zur Erkennung eines Deckels oder eines Saftsammelgefäßes ausgebildet sind.

Vorteilhafter Weise ist der Kulissenträger mit dem Betätigungselement über einen Schnapprastmechanismus verbunden ist. Insbesondere kann der Kulissenträger von der Rückseite einer Gehäusewand eingesetzt und durch ein an der Vorderseite vorgesehenes Betätigungselement verrastet sein.

Vorzugsweise ist der Schieber in seiner das Betätigungselement blockierenden Stellung mittels eines Spannelements verschiebbar vorgespannt am Haushaltsgerät gelagert. Das Spannelement kann eine sich einerseits an einem Gehäuseteil und andererseits an einen Vorsprung des Schiebers abstützende Federwendel sein.

In einer bevorzugten Ausgestaltung der Erfindung ist der Fühler als ein am Gehäuseteil geführter, in einen Aufnahmeraum für den Tresterbehälter hineinragender Anschlagkörper ausgebildet. Dabei kann der Anschlagkörper aus einer im wesentlichen im Gehäuseteil verborgenen Sperrposition in eine Freigabeposition verschiebbar sein.

Der Anschlagkörper kann zu seiner verschiebbaren Lagerung in einer Bodenplatte des Gehäuseteils zwei gegenüberliegende, sich am Gehäuseteil abstützende Führungsschrägen aufweisen. Auch in dieser Ausgestaltung kann der Anschlagkörper aus einer im wesentlichen im Gehäuseteil verborgenen Sperrposition in eine Freigabeposition verschiebbar sein.

Um ein Verschieben des Schieber über die Sperrposition hinaus zu verhindern, weist der Anschlagkörper eine in der Sperrposition am Gehäuseteil anliegende Anschlagfläche auf.

In einer vorteilhaften Variante weist der Anschlagkörper eine in der Sperrposition in den Aufnahmeraum für den Tresterbehälter hineinragende Schiebewand auf, die bei Einsetzen des Tresterbehälters in die am Haushaltsgerät eingesetzte Position an einem Wandabschnitt des Tresterbehälters anliegend den Schieber in die Freigabeposition setzt.

In einer weiteren vorteilhaften Variante weist der Anschlagkörper eine in der Sperrposition im Gehäuseteil verborgene Riegelwand aufweist, die in der am Haushaltsgerät eingesetzten Position des Tresterbehälters in den Aufnahmeraum für den Tresterbehälter hineinragt und einen Wandabschnitt des Tresterbehälters hintergreift.

Neben der Riegelwand kann zum Zurückhalten des Tresterbehälters in seiner Betriebsposition der Anschlagkörper eine in der am Haushaltsgerät eingesetzten Position des Tresterbehälters in einen Eingriff am Tresterbehälters hineinragende Haltenase aufweisen, so dass der Tresterbehälter während des Betriebes des Haushaltsgerätes nicht entfernt werden kann.

Der Entsafter oder die Saftzentrifuge kann auch mit einer Sicherheitseinrichtung ausgestattet sein, die ein zwischen einer Offenstellung bei fehlendem Behälterdeckel und einer Schließstellung bei betriebsgemäß aufgesetztem Behälterdeckel, und durch den Behälterdeckel verschiebbares Abtastorgan sowie ein zwischen einer Freigabeposition und einer Sperrposition bewegbares Sperrmittel aufweist, durch das ein Betätigungselement eines Schalters zur Steuerung eines Antriebsmotors bei fehlendem Behälterdeckel gegen Einschalten blockierbar ist.

Dieses Sperrmittel kann in Verschieberichtung des Abtastorgans zwischen der Freigabeposition und der Sperrposition bewegbar sein und zum Sperren des Betätigungselements oder des Schalters ein Anschlag für das Sperrmittel aufweisen. Durch diese Ausgestaltung wird eine sehr raumsparende Sicherheitseinrichtung für die Deckelverriegelung geschaffen.

Vorzugsweise ist der Anschlag an einer Kulisse ausgebildet ist, die an einem Kulissenträger vorgesehen ist, der mit dem Betätigungselement verbunden ist. So ist die Sicherheitseinrichtung nicht nur benutzerfreundlich vollständig im Innenraum des Gehäuses vorgesehen, sondern sie baut auch sehr schmal, so dass trotz einer sehr zuverlässig arbeitenden Sicherheitseinrichtung weiterhin viel Platz zur Aufnahme des Motors und der Steuerung verbliebt. Insbesondere ist die Sicherheitseinrichtung nahe des Betätigungselement angekoppelt.

Das Sperrmittel kann vorteilhafter Weise als ein in die Kulisse eingreifender Zapfen ausgebildet sein.

Für eine kostengünstige Herstellung kann das Sperrmittel mit dem Abtastorgan vorzugsweise einstückig verbunden sein.

Zur Erzielung einer besonders raumsparenden, flächen Bauweise kann das Abtastorgan als Schieber ausgebildet sein. Vorzugsweise ist das Abtastorgan bzw. der Schieber mittels eines Spannelements in die Offenstellung vorgespannt am Haushaltsgerät gelagert. Das Spannelement kann eine sich einerseits am Gehäuse und andererseits an einem Ansatz des Sperrmittels abstützende Federwendel sein.

Ein mit dem Betätigungselement verbundenes Entriegelungsmittel kann für den Behälterdeckel vorgesehen sein, das durch Stellen des Betätigungselements in eine Entriegelungsposition bringbar ist, in welcher der Behälterdeckel gelöst und ein Inbetriebsetzen des Antriebsmotors verhindert ist. Dadurch kann der verriegelte Deckel nach Ausschalten des Haushaltsgerätes durch den Benutzer auf einfache und bequeme weise geöffnet werden, ohne den Deckel dazu direkt Handhaben zu müssen.

Das Entriegelungsmittel kann einen im Haushaltsgerät gelagerten Schieber aufweisen, der zum Lösen von am Gerätegehäuse und Behälterdeckel vorgesehenen Rast- und Gegenrastmittel zwischen Gerätegehäuse und Behälterdeckel einschiebbar ist. So wird eine sehr sichere Rast- und Gegenrastmittelverbindung auf zuverlässige Weise mit geringem Kraftaufwand wieder gelöst.

Vorzugsweise sind zwei Rastausnehmungen an jeweils einem Stegwandabschnitt des Behälterdeckels vorgesehen und der Schieber ist zwischen den zwei Rastausnehmungen des Stegwandabschnitts zwischen Gerätegehäuse und Behälterdeckel einschiebbar.

Das Entriegelungsmittel kann einen in die Kulisse eines mit einem Drehknebel verbundenen Kulissenträgers eingreifenden Zapfen aufweisen.

Vorteilhafter Weise ist das Entriegelungsmittel und das Abtastorgan mit dem selben Zapfen verbunden. Insbesondere bei der Herstellung als Kunststoff-Spritzgußteil kann das Abtastorgan und das Entriegelungsmittel einteilig ausgebildet sein.

Ein bevorzugtes Ausführungsbeispiel der Erfindung ist anhand der Figuren 1 bis 12 im folgenden näher erläutert.

Es zeigen:
Figur 1 eine perspektivische Ansicht einer Saftzentrifuge, die eine erfindungsgemäße Sicherheitseinrichtung für ein Sammelgefäß aufweist;
Figur 2 eine Schnittansicht der Saftzentrifuge aus Figur 1 mit der Sicherheitseinrichtung für das Sammelgefäß;
Figur 3 eine Seitenansicht mit dem Sammelgefäß gemäß Figur 2 und der Sicherheitseinrichtung in einer Freigabeposition für das Betätigungselement;
Figur 4 eine perspektivische Ansicht der Sicherheitseinrichtung gemäß Figur 2 in einer Sperrposition für das Betätigungselement;
Figur 5 eine Teilschnittansicht der Sicherheitseinrichtung gemäß Figur 2 in einer Sperrposition für das Betätigungselement;
Figur 6 eine Teilschnittansicht der Gehäuseverrastung gemäß Figur 2 in einer Freigabeposition für das Betätigungselement;
Figur 7 eine Teilschnittansicht der Gehäuseverrastung gemäß Figur 2 in einer Verriegelungsposition für den Tresterbehälter;
Figur-8 eine Teilschnittansicht der Sicherheitseinrichtung gemäß Figur 2 mit aufgesetztem Behälterdeckel in einer Freigabeposition für das Betätigungselement;
Figur 9 eine Teilansicht der Sicherheitseinrichtung gemäß Figur 2 ohne Behälterdeckel in einer Sperrposition für das Betätigungselement;
Figur 10 eine Schnittansicht der Saftzentrifuge gemäß Figur 2 mit aufgesetztem Behälterdeckel in einer Freigabeposition für das Betätigungselement;
Figur 11 eine Teilansicht der Sicherheitseinrichtung gemäß Figur 2 mit Behälterdeckel in einer Entriegelungsposition;
Figur 12 eine Schnittansicht der Saftzentrifuge gemäß Figur 11 mit aufgesetztem Behälterdeckel in der Entriegelungsposition;

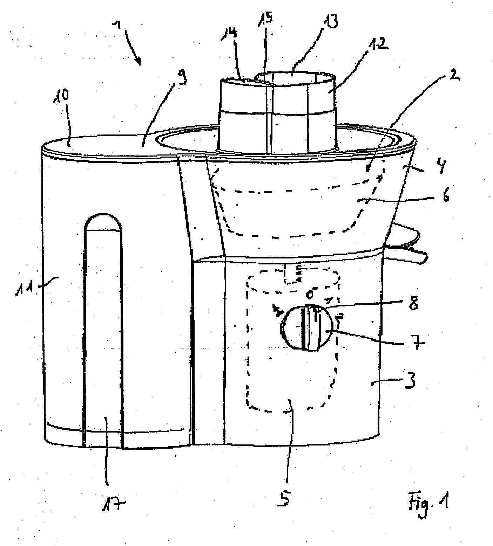

Eine in Figur 1 dargestellte Saftzentrifuge 1 weist ein Gehäuse 2 auf, das ein im wesentlichen hohlzylindrisches Unterteil 3 und ein konisch geformtes Oberteil 4 umfasst. Nur verdeckt schematisch sind ein im Unterteil 3 angeordneter Antriebsmotor 5 für ein im Oberteil 4 drehbar gelagertes Arbeitswerkzeug 6 gezeigt. Der elektrisch betreibbare Antriebsmotor 5 ist über ein drehbares Betätigungselement 7 steuerbar. Das Betätigungselement 7 ist als Drehknebel ausgebildet und an einer vorderen Seitenwand des hohlzylindrischen Unterteils 3 angebracht. In der dargestellten Drehposition des Betätigungselements 7 zeigt eine Strichmarkierung 8 die Schalterstellung "0" an, in der das Haushaltsgerät außer Betrieb gesetzt ist. In einer im Uhrzeigersinn weiter rechts gelegenen Schalterstellung "I" des Betätigungselements 7 ist die Saftzentrifuge 1 mit einer niedrigen Drehzahl angetrieben und in einer noch weiter rechts gelegenen Schalterstellung "II" des Betätigungselements 7 ist die Saftzentrifuge 1 mit einer hohen Drehzahl angetrieben. In einer im Uhrzeigesinn links von der Schalterstellung "0" gelegenen Schalterstellung "A" befindet sich das Betätigungselement 7 in einer Entriegelungsposition 18, in der ein Gerätedeckel 9 aus seiner Verriegelungsposition lösbar ist, so dass bei abgenommenen Gerätedeckel 9 das Arbeitswerkzeug 6 entnommen werden kann. Der Gerätedeckel 9 liegt auf einer Oberseite des Gehäuses 2 bündig auf und deckt auch eine obere Öffnung 10 eines Tresterbehälters 11 ab. Der Gerätedeckel 9 trägt einen Einfüllschacht 12 über den Nahrungsmittelstücke in das Gehäuse 2 auf das Arbeitswerkzeug 6 aufbringbar sind. Der Einfüllschacht 12 ist zweiteilig ausgebildet, d.h. es sind zwei Einfüllstutzen 13 und 14 vorhanden, die unterschiedliche Öffnungsquerschnitte aufweisen und die durch eine Schachtwand 15 voneinander getrennt sind. Die Einfüllstutzen 13 und 14 haben einen im wesentlichen kreisrunden bis ovalen Querschnitt, wobei der Querschnitt des Einfüllstutzens 13 größer als der Querschnitt des Einfüllstutzens 14 ausgebildet ist. Die über den Einfüllstutzen 13 oder 14 eingebrachten Nahrungsmittelstücke werden durch das Arbeitswerkzeug 6 in überwiegend feste Tresteranteile und in Saftanteile getrennt. Die Tresteranteile werden nach der Trennung im Tresterbehälter 11 gesammelt und die Saftanteile in einen Auffangbehälter 16 weitergeleitet. Der Tresterbehälter 11 weist an zwei gegenüberliegenden Behälterwänden muldenartig nach innen zurückspringende, rinnenförmige Griffbereiches 17 auf.

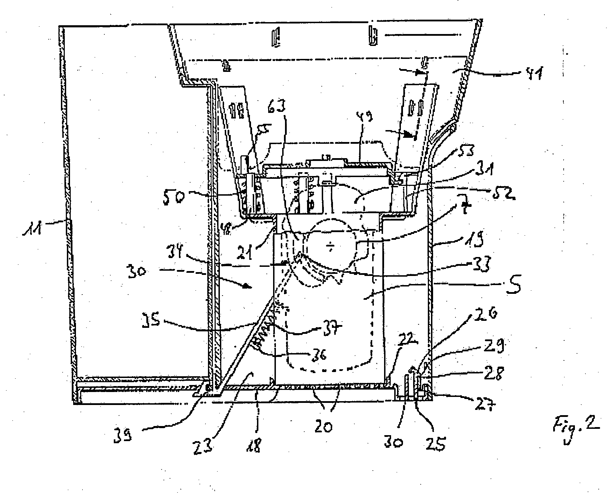

Das in Figur 2 in einer Schnittansicht dargestellte Gehäuse 2 weist ein erstes Gehäuseteil 18 und ein zweites Gehäuseteil 19 auf. Das erste Gehäuseteil 18 bildet einen Boden der Saftzentrifuge 1, der zur Kühlung des Motors 5 mit Luftdurchtritten 20 versehen ist. Der Motor 5 ist in einem Motortopf 21 gehalten, der in einem am ersten Gehäuseteil 18 angeformten Sitz 22 gehalten ist. Der Sitz 22 erstreckt sich als ringförmiger Vorsprung von der Innenseite des ersten Gehäuseteils 18 in einen Aufnahmeraum 23 für den Motortopf 21 des Motors 5. Damit der Motortopf 21 selbstzentrierend in den ringförmigen Sitz 22 einsetzbar ist, weist die obere Kante des Sitzes 22 eine Fase 24 auf. Das als Bodenplatte ausgebildete erste Gehäuseteil 18 trägt ein Rastmittel 25. Das Rastmittel 25 ist als eine an dem ersten Gehäuseteil 18 angeformte Lasche ausgebildet, die einen federnden Rasthaken 26 trägt. In seiner verrasteten Position hintergreift der Rasthaken 26 des Rastmittels 25 ein Gegenrastmittel 27 am zweiten Gehäuseteil 19. Das Gegenrastmittel 27 ist als Rastvorsprung 28 ausgebildet. Für eine zusätzliche stabile verbindung von erstem Gehäuseteil 18 und zweitem Gehäusetell 19 ist am ersten Gehäuseteil 18 eine Rastausnehmung 29 angeformt, in die der Rastvorsprung 28 des zweiten Gehäuseteils 19 eingreift. Das erste Gehäuseteil 18 und das zweite Gehäuseteil 19 sind an mehreren Stellen über eine Anzahl von Rastmittel 25 und Gegenrastmittel 27 verbunden. Diese Verbindungsstellen sind vorzugsweise zumindest annähernd gleichmäßig über den Umfang des Gehäuses 2 verteilt angeordnet.

Eine zusätzliche Tresterbehälter-Sicherheitseinrichtung 30 weist einen mit dem Betätigungselement 7 verbundenen Kulissenträger 31 auf. Der Kulissenträger 31 ist zusammen mit dem Betätigungselement 7 drehbar am Gehäuseteil 19 gelagert. Der Kulissenträger 31 weist eine Kulisse 63 auf, in der ein als Zapfen 33 ausgebildetes Sperrelement 34 eingreift. Das Sperrelement 34 bzw. der Zapfen 33 ist mit einem Schieber 35 verbunden, der verschiebbar im Gehäuse 2 gelagert ist. Der Schieber 35 weist einen Vorsprung 36 auf, an dem ein erstes Ende eines als Federwendel ausgebildetes Spannelement 37 aufsitzt. Ein zweites Ende des Spannelements 37 sfützt sich am Gehäuseteil 19 ab.

Ein in Figur 2 gestrichelt dargestelltes Sammelgefäß 41 ist unterhalb des Arbeitswerkzeuges 6 (Figur 1), das als Zentrifugensieb der Saftzentrifuge 1 ausgebildet ist, zum Auffangen des vom Zentrifugensieb abgetrennten Saftes vorgesehen.

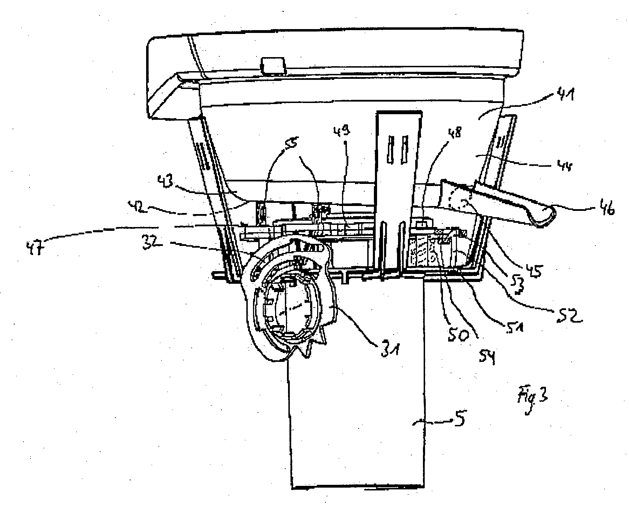

Das Sammelgefäß 41 ist in Figur 3 in einer Seitensicht gezeigt. Das Sammelgefäß 41 weist einen im wesentlichen ebenen Boden 42 auf, an dessen Umfangsrand 43 sich eine topfförmige Seitenwand 44 anschließt. Die Seitenwand 44 des Sammelgefäßes 41 umgibt das Arbeitswerkzeuges 6 derart, dass Saft der von dem Zentrifugensieb abgetrennt wurde nach unten abtropfen kann und durch das Sammelgefäß 41 aufgefangen wird. Das Sammelgefäß 41 weist eine Öffnung 45 auf, durch die angesammelter Saft über eine rinnenartig ausgebildete Schnaupe 46 in einen nicht dargestellten Trinkbecher ablaufen kann.

Ein Inbetriebsetzen bei fehlendem Sammelgefäßes 41 ist durch die Sicherheitseinrichtung 47 verhindert. Die Sicherheitseinrichtung 47 ist mittels Stehbolzen 48 vertikal verschieblich am Haushaltsgerät gelagert. Für eine nach oben in Richtung des Sammelgefäßes 41 vorgespannte Lagerung ist eine Bodenplatte 49 der Sicherheitseinrichtung 47 durch ein Spannelement 50 vorgespannt. Die Bodenplatte 49 ist vorzugsweise als Kreisringscheibe ausgebildet. Das Spannelement 50 ist vorzugsweise als Federwendel ausgebildet. Ein unteres Ende des Spannelements 50 stützt sich an einem im Gehäuse 2 befestigten Bauteil 51 ab. Ein oberes Ende des Spannelements 50 drückt gegen die Unterseite der Bodenplatte 49. Um ein Abspringen der Bodenplatte 49 von den Stehbolzen 48 zu verhindern sind eine Anzahl von vorzugsweise gleichmäßig über den Umfang verteilte Rasthaken 52 vorgesehen, die sich insbesondere senkrecht nach oben erstrecken. Die Nasen 53 hintergreifen einen Rastsitz 54, der als Rücksprung in der Bodenplatte 49 der Sicherheitseinrichtung 47 ausgebildet ist. Das Sammelgefäßes 41 wird von einer Anzahl von über den Umfang verteilter Tragstifte 55 getragen.

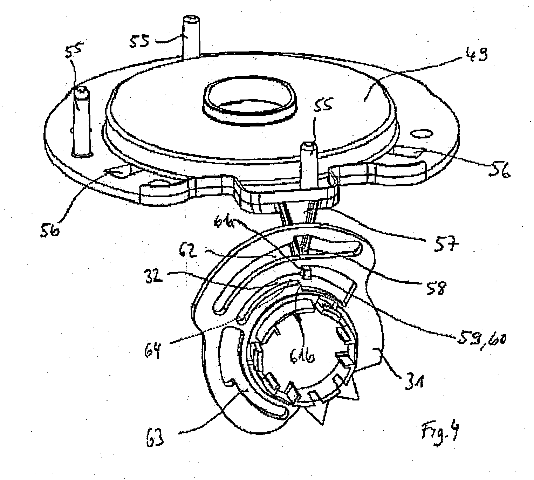

Die vorzugsweise als Kreisringscheibe ausgebildete Bodenplatte 49 ist in Figur 4 dargestellt. An der Bodenplatte 49 sind drei Tragstifte 55 für das Sammelgefäß 41 angeformt. Die Bodenplatte 49 weist auch die als Rücksprung 56 ausgebildeten Rastsitze 54 auf. An einem Umfangsrand der Bodenplatte 49 erstreckt sich ein Verbindungssteg 57. Der Verbindungssteg 57 ist als dreieckförmige, flache Lasche ausgebildet und vorzugsweise direkt an die Bodenplatte 49 angeformt. Ein spritzwinkliges Ende 58 des Verbindungsstegs 57 trägt ein Sperrmittel 59, das als radial nach außen vorstehender Zapfen 60 ausgebildet ist In der Sperrposition liegt das Sperrmittel 59 bzw. der Zapfen 60 an einem Anschlag 61 der Kulisse 32 des Kulissenträgers 31 an. An dem Kulissenträger 31 ist eine zweite Kulisse 62 für eine Deckelsicherheltseinrichtung und eine dritte Kulisse 63 für die Tresterbehälter-Sicherheitseinrichtung 30 vorgesehen.

Dem Sperrmittel 59 bzw. der Zapfen 60 kann an der Kulisse 32 sowohl ein oberer Anschlag 61a und ein unterer Anschlag 61 b zugeordnet sein. Bei fehlendem Sammelgefäß 41 werden die Tragstifte 55 nicht daran gehindert auf Grund der Spannelemente 50 sich nach oben zu bewegen, bis die Rastsitze 54 der Bodenplatte 49 an den Nasen 53 der Rasthaken 52 anstehen. In dieser oberen Sperrposition liegt das Sperrmittel 59 bzw. der Zapfen 60 an dem Anschlag 61 a, 50 das das Betätigungselement 7 blockiert ist und der Schalter nicht eingeschaltet werden kann.

Wenn das Sammelgefäß 41 ordnungsgemäß in das Haushaltsgerät eingesetzt ist, drückt das Sammelgefäß 41 die Tragstifte 55 soweit nach unten, bis die Bodenplatte 49 in einer mittleren Freigabeposition gesetzt ist, in der das Sperrmittel 59 bzw. der Zapfen 60 in Höhe des linken schmalen Abschnitts 64 der Kulisse 32 steht, so dass die Kulisse 31 in Figur 4 im Uhrzeigesinn drehende Richtung verdreht werden kann.

Bei einem unsachgemäß eingesetztem Sammelgefäß 41 kann es möglich sein, dass das Sammelgefäß 41 über die Tragstifte 55 die Bodenplatte 49 über die Freigabeposition hinaus weiter nach unten gedrückt wird. Das Sperrmittel 59 bzw. der Zapfen 60 liegt dann an dem unterer Anschlag 61 b an, so dass bei unsachgemäß eingesetztem Sammelgefäß 41 das Haushaltsgerät ebenfalls nicht gestartet werden kann.

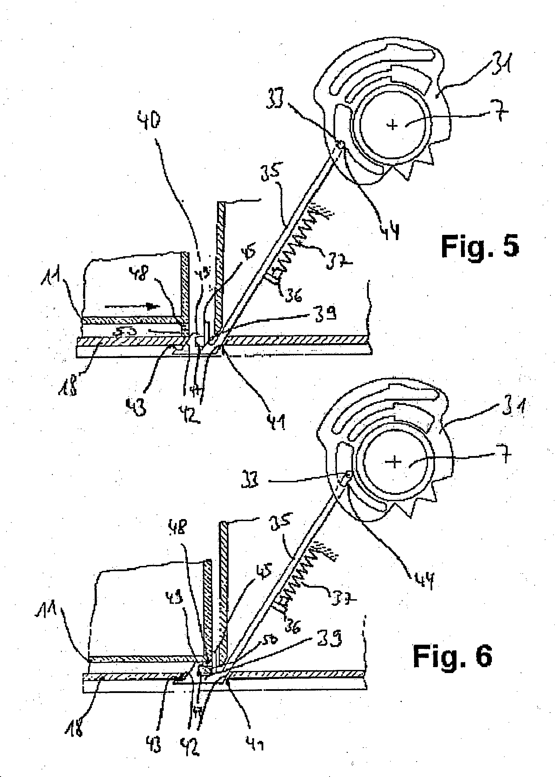

Mittels des Spannelements 37 ist der Schieber 35 in eine in Figur 5 dargestellte Sperrposition nach unten vorgespannt.

In der in Figur 5 gezeigten Sperrposition befindet sich ein als Fühler 38 ausgebildeter Anschlagkörper 39 bodenseitig eines Aufnahmeraumes 40 in einer Aussparung 41 des Gehäuseteils 18. Der Anschlagkörper 39 weist zwei gegenüberliegende Führungsschrägen 42 auf, durch die der Anschlagkörper 39 in eine Bewegungsrichtung in Längserstreckung des Schiebers 35 geführt ist. In einer unteren Position des Anschlagkörpers 39, der Sperrposition, liegt der Zapfen 33 an einem Vorsprung 44 der Kulisse 32 an, so dass das Betätigungselement 7 mit dem Kulissenträger 31 nicht weiter im Uhrzeigersinn gedreht werden kann, wodurch das Einschalten des Motors verhindert ist.

Aus der dargestellten Sperrposition (Figur 5) ist der Schieber 35 in eine höher gelegene, in Figur 6 dargestellte Freigabeposition nach oben verschoben. Zum Verschieben weist der Anschlagkörper 39 eine Schiebewand 45 auf, die durch den Tresterbehälter 11 von einer in Figur 5 gezeigten rechten Position in eine in Figur 6 gezeigten linken Position verschoben ist. Durch das Schieben des Anschlagkörpers 39 nach links wird der Schieber 35 schräg nach links oben geschoben und derZapfen 33 gibt den Vorsprung 44 frei, wodurch der Kulissenträger 31 zusammen mit dem Betatigungselement 7 im Uhrzeigersinn in einer Betriebsposition verstellbar ist. Gleichzeitig liegt die am Anschlagkörper 39 vorgesehene Anschlagfläche 43 an der Unterseite des bodenseitigen Gehäuseteils 18 an. Durch die Anschlagfläche 43 ist ein vollständiges Herausziehen des Anschlagkörpers 39 aus der Aussparung 41 des Gehäuseteils 18 verhindert. In der in Figur 6 dargestellten Drehposition des Kulissenträgers 31 steht das Betätigungselement noch in einer ausgeschalteten Neutralstellung (Schalterstellung "0"), das Betätigungselement 7 ist jedoch durch die Lage des Zapfens 33 zur Drehung freigegeben.

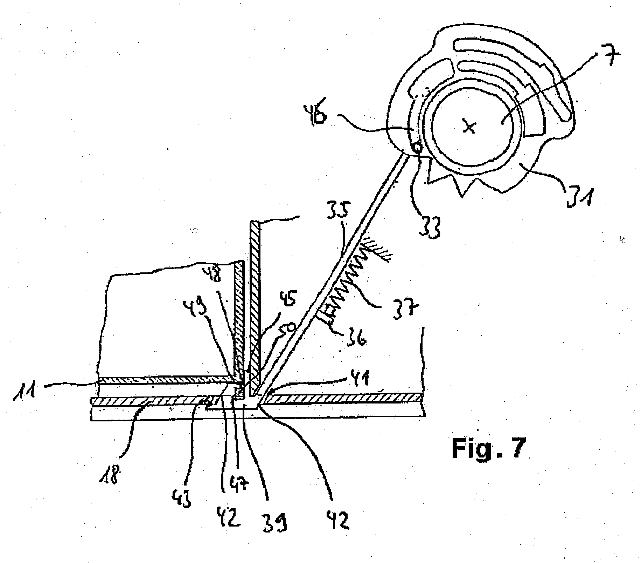

In Figur 7 ist der Kulissenträger 31 in einer gedrehten Betriebsposition (Schalterstellung "I" oder "II") verdreht. Durch eine geeignet geformte Kulissenbahn 46 wird durch die Drehung des Kulissenträgers 31 in die Betriebsposition (Schalterstellung "I" oder "II") der Schieber 35 zusammen mit dem Zapfen 33 ist eine höchstgelegene Verriegelungsposition verschoben. Dabei hintergreift eine Anschlagkörper eine am Anschlagkörper 39 vorgesehene Riegelwand 47 einen Wandabschnitt 50 am Tresterbehälter 11. In einer Betriebsposition (Schalterstellung "I" oder "II") des Betätigungselements 7 kann der Tresterbehälter 11 nicht mehr seitlich aus dem Aufnahmeraum 40 herausgezogen werden. Zusätzlich ist am Anschlagkörper 39 eine Haltenase 49 vorgesehen, die in einen Eingriff 48 an dem Wandabschnitt 50 des Tresterbehälters 11 eingreift. Durch die Haltenase 49 ist zusätzlich ein Herausziehen des Tresterbehälters 11 nach oben verhindert.

Aus einer Sperrposition ist der Schieber 35 in eine höher gelegene, auf Figur 2 zurück kommend dargestellte Freigabeposition nach oben verschoben. Zum Verschieben weist ein Anschlagkörper 39a eine Schiebewand 45 auf, die durch den Tresterbehälter 11 von einer rechten Position in eine linke Position verschoben ist. Durch das Schieben des Anschlagkörpers 39a nach links wird der Schieber 35 schräg nach links oben geschoben und der Zapfen 26 gibt einen Vorsprung 44 frei, wodurch der Kulissenträger 31 zusammen mit dem Betätigungselement 7 im Uhrzeigersinn in einer Betriebsposition verstellbar ist. Gleichzeitig liegt die am Anschlagkörper 39a vorgesehene Anschlagfläche 43 an der Unterseite des bodenseitigen Gehäuseteils 18a an. Durch die Anschlagfläche 43 ist ein vollständiges Herausziehen des Anschlagkörpers 39a aus der Aussparung 41 des Gehäuseteils 18a verhindert. In der dargestellten Drehposition des Kulissenträgers 31 steht das Betätigungselement noch in einer ausgeschalteten Neutralstellung (Schalterstellung "0"), das Betätigungselement 7 ist jedoch durch die Lage des Zapfens 26 zur Drehung freigegeben. In einer gedrehten Betriebsposition (Schalterstellung "I" oder "II") ist der Kulissenträger 31 im Uhrzeigersinn verdreht. Durch eine geeignet geformte Kulissenbahn 46 wird durch die Drehung des Kulissenträgers 31 in die Betriebsposition (Schaltersteltung "I " oder "II") der Schieber 35 zusammen mit dem Zapfen 26 ist eine höchstgelegene Verriegelungsposition verschoben. Dabei hintergreift eine am Anschlagkörper 39a vorgesehene Riegelwand 47 einen Wandabschnitt 50 am Tresterbehälter 11. In einer Betriebsposition (Schalterstellung "I" oder "II") des Betätigungselements 7 kann der Tresterbehälter 11 nicht mehr seitlich aus dem Aufnahmeraum 40a herausgezogen werden. Zusätzlich ist am Anschlagkörper 39a eine Haltenase 49 vorgesehen, die in einen Eingriff 48 an dem Wandabschnitt 50 des Tresterbehälters 11 eingreift. Durch die Haltenase 49 ist zusätzlich ein Herausziehen des Tresterbehälters 11 nach oben verhindert.

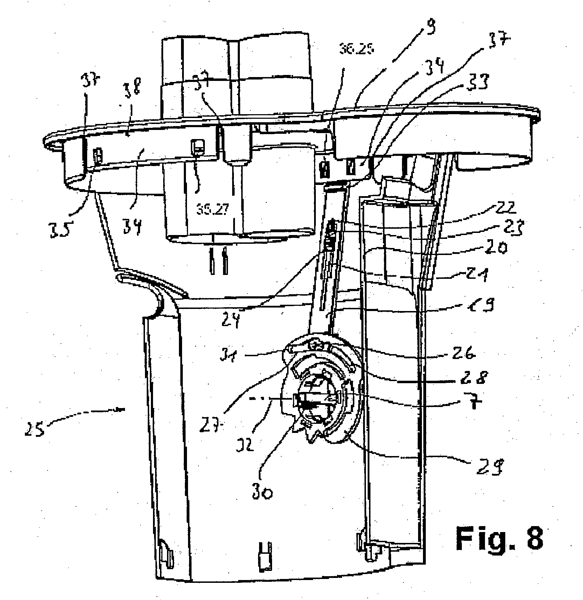

Zum Entriegeln des Behälterdeckels 9 ist, wie in Figur 8 dargestellt, ein als Schieber 19 ausgebildetes Entriegelungsmittel vorgesehen. Der Schieber 19 ist entlang einer Gehäusewand 20 des Gerätegehäuses 25 vertikal verschieblich geführt. Der Schieber 19 hat die Form eines flachen Spatels, wobei in einem mittleren Bereich eine Ausnehmung 21 eingebracht ist. An einem oberen Ende der Ausnehmung 21 ist ein Zapfen 22 angeformt, der das obere Ende einer Federwendel 23 trägt. Das untere Ende der Federwendel 23 sitz auf einem Vorsprung 24 auf, der an der Gehäusewand 20 nach innen vorspringend angeformt ist. Die Federwendel 23 spannt den Schieber 19 nach oben geringfügig gegen den Behälterdeckel 9 drückend vor.

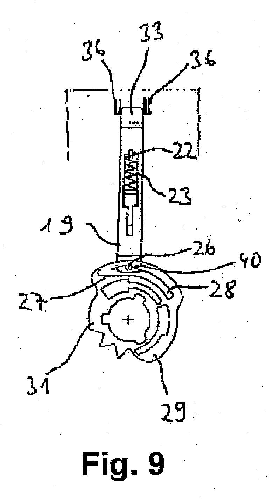

In Figur 9 ist das Haushaltsgerät ohne Behälterdeckel 9 dargestellt. Die Federwendel 23 spannt den Schieber 19 ohne Gegenhalt eines Behälterdeckels 9 so weit nach oben vor, dass ein an dem Schieber 19 angeformter Zapfen 26 in ein als Rücksprung in einer Kulisse 28 ausgebildetes Anschlag 40 eingreift, so dass ein Drehen des Betätigungselements 7 in eine Betriebsposition (in Figur 9 entgegen dem Uhrzeigersinn) verhindert ist. Ohne aufgesetztem Behälterdeckel 9 ist somit ein Betrieb des Haushaltsgerätes nicht möglich. In der in Figur 9 dargestellten Position des Kulissenträgers 29 befindet sich das Betätigungselement 7 in einer Ruheposition 40 in der die Strichmarkierung 8 auf die Schalterstellung "0" zeigt (Figur 1). Die Federwendel 23 spannt den Schieber 19 nach oben vor, so dass bei abgenommenem Behälterdeckel 9 der Zapfen 26 des Schiebers 19 In einen Absatz 41 der Kulisse 28 eingreift, so dass das Betätigungselement 7 wie in Figur 9 dargestellt nicht entgegen dem Uhrzeigersinn in eine Betriebsposition 42 (Figur 1) drehbar ist.

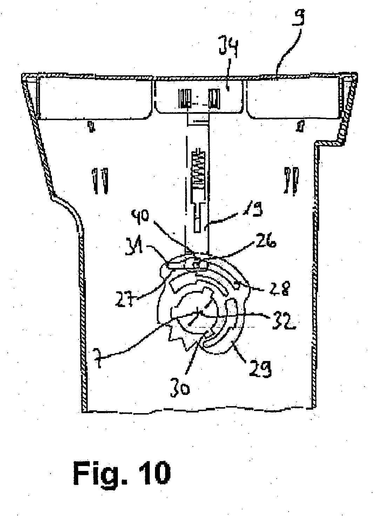

In der in Figur 10 dargestellten eingesetzten Position des Behälferdeckels 9 ist der Schieber 19 gegen die Kraft der Federwendel 23 durch den Behälterdeckel 9 derart gespannt, dass der an dem Schieber 19 angeformter Zapfen 26 auf einer inneren Bahn 27 der Kulisse 28 in einem Kulissenträger 29 ansteht. Der Kulissenträger 29 ist über Schnapprastverbindungen 30 mit dem Betätigungselement 7 drehfest verbunden. In Figur 10 ist der Schieber 19 mit dem Kulissenträger 29 in der Ruheposition gezeigt. Bei aufgesetztem Behälterdeckel 9 schiebt der Behälterdeckel 9 über den Keilabschnitt 33 des Schiebers 19 den Zapfen 26 in eine Freigabeposition, in der die Bahn der Kulisse 28 freigegeben ist, so dass das Betätigungselement 7 wahlweise in die Betriebspositionen "1" und "2", sowie in die Entriegelungsposition "A" 18 (Figur 1) drehbar ist.

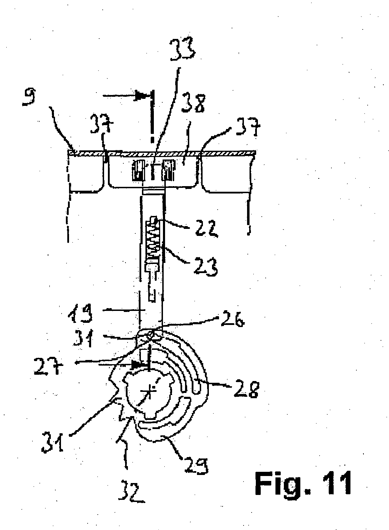

Wird das Betätigungselement 7 wie in Figur 10 dargestellt im Uhrzeigersinn in die Entriegefungsposition 18 gedreht, so gleitet der Zapfen 26 auf der inneren Bahn 27 bis zu dem in Figur 11 dargestellten linken Ende 31 der Kulisse 28. Da die inneren Bahn 27 bezüglich der Drehachse 32 des Betätigungselements 7 keinen konstanten Radius aufweist, sondern in Richtung auf das Ende 31 der Kulisse 28 zunehmenden Radius aufweist, wird bei Drehen des Betätigungselements 7 in die Entriegelungsposition 18 der Zapfen 26 zunehmend nach oben geschoben. Mit dem Zapfen 26 schieb sich auch der Schieber 19 nach oben, bis ein Keilabschnitt 33 des Schiebers 19 sich zwischen Gehäusewand 20 und einer Stegwand 34 des Behälterdeckels 9 schiebt. Die Stegwand 34 trägt zwei Rastausnehmungen 35 in die zwei zugeordnete Rasnasen 36 eingreifen. Die Rastnasen 36 sind an der Gehäusewand 20 nach innen vorspringend angeformt. Beim Einsetzen des Behälterdeckel 9 in das Gerätegehäuse 25 läuft die Stegwand 34 auf Schrägabschnitte der Rastnasen 36 auf und die Stegwand 34 biegt sich nach innen, bis die Rastausnehmungen 35 die Rastnasen 36 überspringen und mit diesen verrasten. Zur Verbesserung des federnden Biegens der Stegwand 34 sind jeweils zwei Rastausnehmungen 35 durch randoffene Aus nehmungen 37 auf einen Stegwandabschnitt 38 abgegrenzt, so dass die federnden Eigenschaften der Stegwandabschnitte 38 verbessert ist.

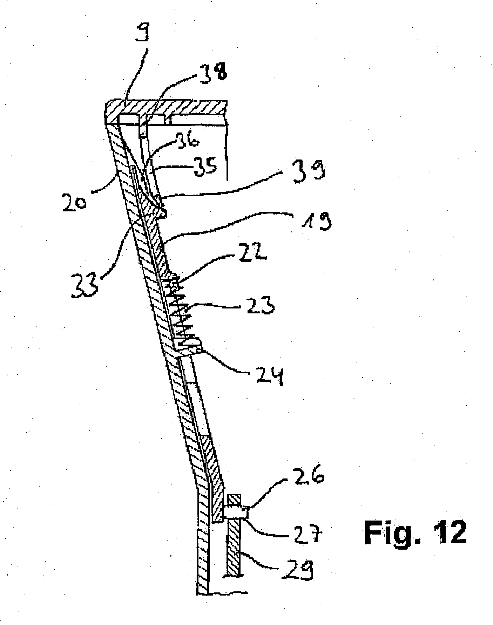

Figur 12 zeigt den Schieber 19 aus Figur 11 in einer Schnittdarstellung in einer zwischen Stegwandabschnitt 38 und Gehäusewand 20 eingeschobenen Position des Keilabschnitts 33. Der Keilabschnitt 33 des Schiebers 19 ist so weit zwischen dem Stegwandabschnitt 38 und der Gehäusewand 20 eingeschoben, dass der Stegwandabschnitt 38 gemäß Figur 12 nach rechts, also in das Innere des Gehäuses aufgebogen ist. Das Aufbiegen erfolgt durch das Auflaufen einer freien Kante 39 des Stegwandabschnitts 38 auf den Keilabschnitt 33 des Schiebers 19. In der aufgebogenen Position des Stegwandabschnitts 38 geben die Rastausnehmungen 35 die Rastnasen 36 frei. An dem oberen Ende der Ausnehmung 21 ist der Zapfen 22 angeformt, der das obere Ende der Federwendel 23 trägt Das untere Ende der Federwendel 23 sitz auf dem Vorsprung 24 auf, der an der Gehäusewand 20 nach innen vorspringend angeformt ist. Die Federwendel 23 spannt den Schieber 19 nach oben geringfügig gegen den Behälterdeckel 9 drückend vor.

## Patentansprüche

1. Elektromotorisches Haushaltsgerät, insbesondere Entsafter oder Saftzentrifuge (1) mit einem durch eine Sicherheitseinrichtung (47) gegen Einschalten blockierbaren Betätigungselement (7) für einen Schalter zum Steuern eines Antriebsmotors (5), der zum Antrieb eines Arbeitswerkzeugs (6) vorgesehen ist, dem ein Sammelgefäß (41) für abgetrennte Nahrungsmittelbestandteile zugeordnet ist, **dadurch gekennzeichnet, dass** die Sicherheitseinrichtung (47) durch das Sammelgefäß (41) in seiner betriebsgemäß eingesetzten Position in eine das Betätigungselement (7) freigebende Stellung setzbar ist, und die Sicherheitseinrichtung (47) ein in eine Kulisse (32) eines mit dem Betätigungselement (7) verbundenen Kulissenträgers (31) eingreifendes, zum Blockieren des Schalters an einem Anschlag der Kulisse (32) anliegendes Sperrmittel (59) aufweist.

2. Haushaltsgerät nach Anspruch 1, **dadurch gekennzeichnet, dass** die Sicherheitseinrichtung (47) vertikal verstellbar ist und das Sperrmittel (59) in einer im wesentlichen horizontalen Richtung in die Kulisse (32) des Kulissenträgers eingreift.

3. Haushaltsgerät nach Anspruch 2, **dadurch gekennzeichnet, dass** das Sperrmittel (59) unterhalb einer Bodenplatte (49) der Sicherheitseinrichtung (47) angeordnet und radial nach außen vorstehend ausgebildet ist.

4. Haushaltsgerät nach Anspruch 3, **dadurch gekennzeichnet, dass** das Sperrmittel (59) als Zapfen (60) ausgebildet und vorzugsweise über einen Verbindungssteg (57) mit der Bodenplatte (49) verbunden ist.

5. Haushaltsgerät nach Anspruch 3 oder 4, **dadurch gekennzeichnet, dass** die Bodenplatte (49) als eine den Motor (5) koaxial umgebende Kreisringscheibe ausgebildet ist.

6. Haushaltsgerät nach einem der Ansprüche 1 bis 5, **dadurch gekennzeichnet, dass** die Sicherheitseinrichtung (47) in der das Betätigungselement (7) blockierenden Stellung mittels mindestens eines sich einerseits an einem Gehäuseteil (2) oder einem Bauteil (51) und andererseits an der Sicherheitseinrichtung (47) abstützendes, vorzugsweise als Federwendel ausgebildetes Spannelement (50) vorgespannt am Haushaltsgerät gelagert ist.

7. Haushaltsgerät nach einem der Ansprüche 1 bis 6, **dadurch gekennzeichnet, dass** die Sicherheitseinrichtung (47) mindestens drei über einen Umfang verteilte, vertikal ausgerichtete Tragstifte (55) für das Sammelgefäß (41) aufweist.

8. Haushaltsgerät nach einem der Ansprüche 1 bis 7, **dadurch gekennzeichnet, dass** die Sicherheitseinrichtung (47) über mindestens einen Schnapprastmechanismus in ihrer vorgespannten Lage an dem Gehäuseteil (2) oder dem Bauteil (51) gehalten ist.

9. Haushaltsgerät nach Anspruch 8, **dadurch gekennzeichnet, dass** der Schnapprastmechanismus mindestens einen am Gehäuseteil (2) oder einem Bauteil (51) vorgesehenen Rasthaken aufweist, der in einen zugeordneten Rastsitz (54) an der Sicherheitseinrichtung (47) angreift.

10. Haushaltsgerät nach Anspruch 9, **dadurch gekennzeichnet, dass** der mindestens eine Rastsitz (54) als Rücksprung (56) an der Bodenplatte (49) der Sicherheitseinrichtung (47) ausgebildet ist.

11. Haushaltsgerät nach Anspruch 10, **dadurch gekennzeichnet, dass** der Rücksprung (56) zur verborgenen Aufnahme einer Rastnase (53) des Rasthakens (52) ausgebildet ist.

12. Haushaltsgerät nach einem der Ansprüche 1 bis 11, **dadurch gekennzeichnet, dass** eine Sicherheitseinrichtung (30) einen Fühler (38) zur Erkennung des Sammelgefäßes (41) in einer am Haushaltsgerät eingesetzten Position aufweist, durch welchen Fühler (38) bei Vorhandensein des Sammelgefäßes (41) die Sicherheitseinrichtung (30) in eine das Betätigungselement (7) freigebende Stellung gesetzt ist.

13. Haushaltsgerät nach einem der Ansprüche 1 bis 12, **gekennzeichnet durch** eine Sicherheitseinrichtung, die ein zwischen einer Offenstellung bei fehlendem Behälterdeckel (9) und einer Schließstellung bei betriebsgemäß aufgesetztem Behälterdeckel (9) und **durch** den Behälterdeckel (9) verschiebbares Abtastorgan (33) sowie ein zwischen einer Freigabeposition und einer Sperrposition bewegbares Sperrmittel (26) aufweist, **durch** das ein Betätigungselement (7) eines Schalters zur Steuerung eines Antriebsmotors (5) bei fehlendem Behälterdeckel (9) gegen Einschalten blockierbar ist, und das Sperrmittel (26) in Verschieberichtung des Abtastorgans (33) zwischen der Freigabeposition und der Sperrposition bewegbar ist und zum Sperren des Betätigungselements (7) oder des Schalters ein Anschlag (40) für das Sperrmittel (26) vorgesehen ist.

## Claims

1. Electric motor-driven household appliance, especially juicer or juice centrifuge (1) with an actuation element (7) able to be prevented from switching on by a safety device (47) for a switch to control a drive motor (5), which is designed to drive a tool (6) to which a collection vessel (41) for separated foodstuff constituents is assigned, **characterised in that** the safety device (47) is able to be put by the collection vessel (41) in its operationally specified position (41) into a setting releasing the actuation element (7) and the safety device (47) has a blocking means (59) engaging into a slot guide (32) of a slot guide carrier (31) connected to the actuation element (7) for blocking the switch when in contact with a stop of the slot guide (32).

2. Household appliance according to claim 1, **characterised in that** the safety device (47) is vertically adjustable and the blocking means (59) engages in an essentially horizontal direction into the slot guide (32) of the slot guide carrier.

3. Household appliance according to claim 2, **characterised in that** the blocking means (59) is disposed below a base plate (49) of the safety device (47) and is embodied projecting radially outwards.

4. Household appliance according to claim 3, **characterised in that** the blocking means (59) is embodied as a pin (60) and is preferably connected to the base plate (49) via a connecting web (57).

5. Household appliance according to claim 3 or 4, **characterised in that** the base plate (49) is embodied as a circular disc surrounding the motor (5) coaxially.

6. Household appliance according to one of claims 1 to 5, **characterised in that** the safety device (47), in the setting blocking the actuation element (7), is supported pre-tensioned on the household appliance by means of at least one tensioning element (50) resting on one side on a housing part (2) or a component (51) and on the other side on the safety device (47), preferably embodied as a spring coil.

7. Household appliance according to one of claims 1 to 6, **characterised in that** the safety device (47) has at least three vertically aligned bearer pins (55) for the collection vessel (41) distributed over a circumference.

8. Household appliance according to one of claims 1 to 7, **characterised in that** the safety device (47) is held via at least one snap-lock mechanism in its pre-tensioned position on the housing part (2) or the component (51).

9. Household appliance according to claim 8, **characterised in that** the snap-lock mechanism has at least one latching hook provided on the housing part (2) or a component (51), which engages into an assigned latching seat (54) on the safety device (47).

10. Household appliance according to claim 9, **characterised in that** the at least one latching seat (54) is embodied as a recess (56) on the base plate (49) of the safety device (47).

11. Household appliance according to claim 10, **characterised in that** the recess (56) is embodied for concealed receiving of a latching lug (53) of the latching hook (52).

12. Household appliance according to one of claims 1 to 11, **characterised in that** a safety device (30) has a feeler (38) for detecting the collection vessel (41) in a position inserted on the household appliance, through which feeler (38), if the collection vessel (41) is present, the safety device (30) is put into a setting releasing the actuation element (7).

13. Household appliance according to one of claims 1 to 12, **characterised by** a safety device which has a sensing organ (33) able to be moved between an open position with a missing container cover (9) and a closed position with a container cover (9) put on for correct operation and able to be displaced by the container cover (9) as well as a blocking means (26) able to be moved between a release position and a locking position, through which an actuation element (7) of a switch for controlling a drive motor (5) if the container cover (9) is missing, is able to be prevented from switching on, and the blocking means (26), in the displacement direction of the sensing organ (33), is able to be moved between the release position and the blocking position and a stop (40) for the blocking means (26) is designed for blocking the actuation element (7) or the switch.

## Revendications

1. Appareil ménager à moteur électrique, en particulier extracteur de jus ou centrifugeuse à jus (1) comprenant un élément d'actionnement (7) dont l'enclenchement peut être bloqué par un dispositif de sécurité (47) et qui est destiné à un commutateur pour commander un moteur d'entraînement (5) prévu pour entraîner un outil (6) auquel est associé un récipient de récupération (41) pour éléments alimentaires séparés, **caractérisé en ce que** le dispositif de sécurité (47) peut être mis par le récipient de récupération (41) mis en place en position de fonctionnement, dans une position qui libère l'élément d'actionnement (7), et le dispositif de sécurité (47) présente un moyen de blocage (59) qui s'engage dans une coulisse (32) d'un support de coulisse (31) relié à l'élément d'actionnement (7) et qui s'applique contre une butée de la coulisse (31) pour bloquer le commutateur.

2. Appareil ménager selon la revendication 1, **caractérisé en ce que** le dispositif de sécurité (47) est réglable verticalement et le moyen de blocage (59) s'engage dans la coulisse (32) du support de coulisse dans un sens sensiblement horizontal.

3. Appareil ménager selon la revendication 2, **caractérisé en ce que** le moyen de blocage (59) est disposé au-dessous d'une plaque de fond (49) du dispositif de sécurité (47) et est réalisé en saillie dirigée radialement vers l'extérieur.

4. Appareil ménager selon la revendication 3, **caractérisé en ce que** le moyen de blocage (59) est réalisé sous forme de tenon (60) et de préférence relié à la plaque de fond (49) par une barrette de liaison (57).

5. Appareil ménager selon la revendication 3 ou 4, **caractérisé en ce que** la plaque de fond (49) est réalisée comme un disque en forme d'anneau de cercle entourant coaxialement le moteur (5).

6. Appareil ménager selon l'une des revendications 1 à 5, **caractérisé en ce que** le dispositif de sécurité (47) est logé de manière prétendue sur l'appareil ménager, dans la position qui bloque l'élément d'actionnement (7), au moyen d'au moins un élément tendeur (50) prenant appui d'une part sur un élément de boîtier (2) ou un composant (51) et d'autre part sur le dispositif de sécurité (47) et qui est réalisé de préférence sous forme de spirale élastique.

7. Appareil ménager selon l'une des revendications 1 à 6, **caractérisé en ce que** le dispositif de sécurité (47) présente au moins trois tiges de support (55) réparties sur la périphérie et orientées verticalement, pour le récipient de récupération (41).

8. Appareil ménager selon l'une des revendications 1 à 7, **caractérisé en ce que** le dispositif de sécurité (47) est maintenu par au moins un mécanisme à encliquetage dans sa position prétendue sur l'élément de boîtier (2) ou le composant (51).

9. Appareil ménager selon la revendication 8, **caractérisé en ce que** le mécanisme à encliquetage présente au moins un crochet d'encliquetage prévu sur l'élément de boîtier (2) ou un composant (51) et qui s'engage dans un logement d'encliquetage associé (54) prévu sur le dispositif de sécurité (47).

10. Appareil ménager selon la revendication 9, **caractérisé en ce que** le au moins un logement d'encliquetage (54) est réalisé sous forme de renfoncement (56) sur la plaque de fond (49) du dispositif de sécurité (47).

11. Appareil ménager selon la revendication 10, **caractérisé en ce que** le renfoncement (56) est configuré pour recevoir de manière dissimulée un bec d'encliquetage (53) du crochet d'encliquetage (52).

12. Appareil ménager selon l'une des revendications 1 à 11, **caractérisé en ce qu'**un dispositif de sécurité (30) présente un senseur (38) pour détecter le récipient de récupération (41) dans une position de mise en place sur l'appareil ménager, par lequel senseur (38), lorsque le récipient de récupération (41) est présent, le dispositif de sécurité (30) est mis dans une position qui libère l'élément d'actionnement (7).

13. Appareil ménager selon l'une des revendications 1 à 12, **caractérisé par** un dispositif de sécurité qui présente un organe palpeur (33) déplaçable par le couvercle de récipient (9) entre une position d'ouverture lorsqu'un couvercle de récipient (9) manque et une position de fermeture lorsque le couvercle de récipient (9) est posé fonctionnellement, ainsi qu'un moyen de blocage (26) mobile entre une position de libération et une position de blocage, grâce auquel l'enclenchement d'un élément d'actionnement (7) d'un commutateur destiné à commander un moteur d'entraînement (5) peut être bloqué lorsque le couvercle de récipient (9) manque, le moyen de blocage (26) étant mobile entre la position de libération et la position de blocage dans le sens de déplacement de l'organe palpeur (33) et une butée (40) étant prévue pour le moyen de blocage (26) pour bloquer l'élément d'actionnement (7) ou le commutateur.
